# EUROPEAN PATENT APPLICATION

(11) **EP 4 564 480 A1**
(43) Date of publication of application: **04.06.2025**
(21) Application number: 23860336.9
(22) Date of filing: 29.08.2023
(51) Int. Cl.: H01M 4/525, C01G 53/00, H01M 4/505, H01M 10/54

(54) **POSITIVE ELECTRODE ACTIVE MATERIAL**

(30) Priority: 31.08.2022 JP 2022137701
(71) Applicant: Sumitomo Chemical Company, Limited, Tokyo 103-6020 (JP); Kyoto University, Kyoto-shi, Kyoto 606-8501 (JP)
(72) Inventor: TAKIGUCHI TAKEMOTO Marie, Osaka-shi, Osaka 554-8558 (JP); ARAI Nana, Niihama-shi, Ehime 792-8521 (JP); SHIMANO Satoshi, Kyoto-shi, Kyoto 606-8501 (JP)
(74) Representative: Vossius & Partner Patentanwälte Rechtsanwälte mbB
(86) International application number: PCT/JP2023/031203
(87) International publication number: WO 2024/048574

(57) **Abstract**

A positive electrode active material for a lithium secondary battery contains a plurality of secondary particles in which a plurality of primary particles are aggregated and satisfies the following requirements:
(1) the secondary particles each internally have a plurality of voids, a value at a cumulative frequency of 50% in an area-based cumulative frequency distribution of equivalent circle diameters of the voids based on cross-sectional images of the secondary particles is more than 0.2 µm and 0.65 µm or less, and a value at a cumulative frequency of 50% in an area-based cumulative frequency distribution of circularity of the voids based on cross-sectional images of the secondary particles is 2.2 or more and 6.5 or less; and
(2) the primary particles are an oxide containing one or more types of elements selected from the following element group 1 and one or more types of elements selected from the following element group 2:
element group 1: Ni, Co, Mn, Fe, Al, and P; and
element group 2: Li, Na, K, Ca, Sr, Ba, and Mg.

## Description

### Technical Field

The present invention relates to a positive electrode active material.

### Background Art

Conventionally, an oxide containing a plurality of elements such as lithium has been known as a positive electrode active material of a lithium ion secondary battery.

For example, Patent Literatures 1 to 4 disclose that various elements are added to improve characteristics.

### Citation List

### Patent Literature

Patent Literature 1: Japanese Patent No. 6209435
Patent Literature 2: Japanese Unexamined Patent Application Publication No. 2014-216245
Patent Literature 3: Japanese Unexamined Patent Application Publication No. 2020-525998

### Summary of Invention

### Technical Problem

The inventors have focused on the dependency of the depth of charge of the internal electric resistance as one of the characteristics of the battery. In a lithium ion secondary battery using a composite oxide as a positive electrode active material, the internal resistance tends to greatly fluctuate with fluctuation of the depth of charge.

It is not preferable as a characteristic of the battery that the internal resistance greatly changes according to the change in the depth of charge.

The present invention has been made in view of the above problems, and an object thereof is to provide a positive electrode active material capable of reducing fluctuation of internal resistance according to the depth of charge.

### Solution to Problem

[1] A positive electrode active material for a lithium secondary battery, containing a plurality of secondary particles in which a plurality of primary particles are aggregated and satisfying the following requirements:
   (1) the secondary particles each internally have a plurality of voids, a value at a cumulative frequency of 50% in an area-based cumulative frequency distribution of equivalent circle diameters of the voids based on cross-sectional images of the secondary particles is more than 0.2 µm and 0.65 µm or less, and a value at a cumulative frequency of 50% in an area-based cumulative frequency distribution of circularity of the voids based on cross-sectional images of the secondary particles is 2.2 or more and 6.5 or less; and
   (2) the primary particles are an oxide containing one or more types of elements selected from the following element group 1 and one or more types of elements selected from the following element group 2:
      element group 1: Ni, Co, Mn, Fe, Al, and P; and
      element group 2: Li, Na, K, Ca, Sr, Ba, and Mg.
[2] The positive electrode active material for a lithium ion secondary battery described in Claim 1, in which a composition of the positive electrode active material for a lithium secondary battery is represented by the following formula:

   Li₁₊ₐM²_{b}M¹M^{T}_{c}O_{2+d}Xₑ

   provided that, M² represents at least one type of element selected from the group consisting of Na, K, Ca, Sr, Ba, and Mg,
   M¹ represents at least one type of element selected from the group consisting of Ni, Co, Mn, Fe, Al, and P,
   M^{T} represents at least one type of element selected from the group consisting of transition metal elements except Ni, Co, Mn, and Fe,
   X represents at least one type of element selected from the group consisting of nonmetallic elements except O and P, and
   -0.4 < a < 1.5, 0 ≤ b < 0.5, 0 ≤ c < 0.5, -0.5 < d < 1.5, and 0 ≤ e < 0.5 are satisfied.
[3] The positive electrode active material for a lithium secondary battery described in Claim [1] or [2], in which the positive electrode active material is obtained by the following steps (1) to (3):
   step (1): mixing an activation agent containing at least one type of compound selected from the group consisting of a potassium compound and a sodium compound with an electrode material mixture containing a positive electrode active material and a binder;
   step (2): heating the obtained mixture to a retention temperature equal to or higher than a melting start temperature of the activation agent to activate the positive electrode active material contained in the mixture; and
   step (3): bringing the mixture after heating into contact with a water-containing liquid to obtain a slurry containing a solid component and a liquid component, and then separating the slurry into a solid component and a liquid component.

### Advantageous Effects of Invention

There is provided a positive electrode active material capable of reducing fluctuation of internal resistance according to the depth of charge.

### Brief Description of Drawings

FIG. 1 is a schematic view of a cross-section of a positive electrode active material according to one embodiment.
FIGS. 2(a) and 2(b) are schematic views of a cross-section of a raw material positive electrode active material used for producing a positive electrode active material.
FIG. 3(a) is a cross-sectional SEM photograph of a positive electrode active material as a raw material of Example 1, and FIG. 3(b) is a cross-sectional SEM photograph of an activated positive electrode active material obtained in Example 1.
FIG. 4(a) is a cross-sectional SEM photograph of a positive electrode active material as a raw material of Example 2, and FIG. 4(b) is a cross-sectional SEM photograph of an activated positive electrode active material obtained in Example 2.
FIG. 5(a) is a cross-sectional SEM photograph of a positive electrode active material as a raw material of Example 3, and FIG. 5(b) is a cross-sectional SEM photograph of an activated positive electrode active material obtained in Example 3.
FIG. 6 is a cross-sectional SEM photograph of a positive electrode active material of Comparative Example 1.
FIG. 7 is a cross-sectional SEM photograph of a positive electrode active material of Comparative Example 2.
FIG. 8 is a cross-sectional SEM photograph of a positive electrode active material of Comparative Example 3.

### Description of Embodiments

### <Positive Electrode Active Material>

A positive electrode active material according to an embodiment of the present invention will be described.

A positive electrode active material for a lithium ion secondary battery according to the present embodiment contains a plurality of secondary particles in which a plurality of primary particles are aggregated and satisfies the following requirements:
(1) the secondary particles each internally have a plurality of voids, a value at a cumulative frequency of 50% in an area-based cumulative frequency distribution of equivalent circle diameters of the voids based on cross-sectional images of the secondary particles is more than 0.2 µm and 0.65 µm or less, and a value at a cumulative frequency of 50% in an area-based cumulative frequency distribution of circularity of the voids based on cross-sectional images of the secondary particle group is 2.2 or more and 6.5 or less; and
(2) the primary particles are an oxide containing one or more types of elements selected from the following element group 1 and one or more types of elements selected from the following element group 2:
   element group 1: Ni, Co, Mn, Fe, Al, and P; and
   element group 2: Li, Na, K, Ca, Sr, Ba, and Mg.

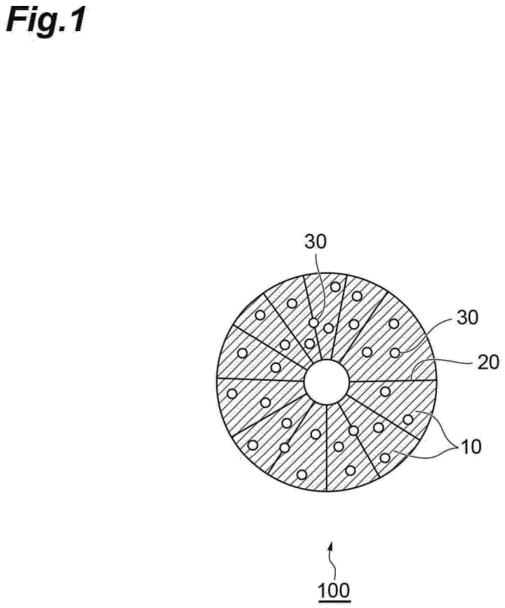

FIG. 1 is a schematic cross-sectional view of an example of a positive electrode active material 100 according to the present embodiment. The positive electrode active material 100 is a secondary particle (aggregate) in which a large number of primary particles 10 are aggregated. Grain boundaries 20 are formed between the primary particles 10. The positive electrode active material 100 has a large number of voids 30. The voids 30 may be completely embedded within the primary particles 10 and may be present at the grain boundaries 20, i.e., between the primary particles 10. The void refers to one that is closed in a cross-section and does not connected to the outside of the secondary particle. The voids 30 are preferably present in the primary particles.

In the present embodiment, a value ECD50 at a cumulative frequency of 50% in an area-based cumulative frequency distribution of equivalent circle diameters of the voids 30 based on a cross-sectional image of the positive electrode active material (secondary particle) is more than 0.2 µm and 0.65 µm or less. The value ECD50 may be 0.25 µm or more, 0.3 µm or more, or 0.4 µm or more. The value ECD50 may be 0.6 µm or less, 0.55 µm or less, or 0.5 µm or less.

Furthermore, a value CRT50 at a cumulative frequency of 50% in an area-based cumulative frequency distribution of circularity of the voids based on a cross-sectional image of a positive electrode active material (secondary particle) group is 2.2 or more and 6.5 or less. The value CRT50 may be 2.5 or more. The value CRT50 may be 6.0 or less, 5.5 or less, or 5.0 or less.

The cross-sectional image can be an image obtained by a scanning electron microscope, and an image of a field emission type scanning electron microscope is preferable. The acceleration voltage can be 5 kV, the magnification can be about ×1000, and the image resolution can be 0.023 µm/pix.

Examples of a sample to be photographed for the cross-sectional image include a sample in which a positive electrode active material (secondary particle) group is embedded in a resin, a sample in which a positive electrode active material layer is embedded in a resin, and a sample in which a positive electrode is embedded in a resin. As a method of processing a cross-section of a sample, various cross-section processing methods such as an ion milling method and a polishing method can be applied.

The equivalent circle diameter of the secondary particles as a target for detecting voids is preferably 1.5 µm or more. Furthermore, it is preferable to set a void having an equivalent circle diameter of 0.05 µm or more as a detection target such as an area.

The circularity of the void is defined by L²/4πS, where L is the perimeter of the void and S is the area of the void, the circularity takes a value of 1 or more, and the closer to 1, the closer to a circle.

Each void in the cross-sectional image can be detected by image analysis software or the like, and the area, the equivalent circle diameter, and the circularity can be obtained. Further, it is possible to obtain the area-based cumulative frequency distribution by weighting each of the equivalent circle diameter and the circularity by the area of the void instead of the number basis of the void.

The total number of secondary particles in the cumulative frequency distribution can be about 500, and the total number of voids in the cumulative frequency distribution is preferably several thousands to several tens of thousands.

The average porosity of the secondary particles in the cross-sectional image can be 3 to 15%. The average porosity may be 4% or more or 5% or more. The average porosity of the secondary particles may be 14% or less or 13% or less. The porosity of each secondary particle in the cross-sectional image is an area ratio of all voids of each secondary particle to the total cross-sectional area (including voids) of each secondary particle. An object to be measured is secondary particles having an equivalent circle diameter of 1.5 µm or more, and an average porosity can be obtained by arithmetic average of porosities of 500 secondary particles.

A value D50 of the 50% frequency in the cumulative volume particle size distribution of the secondary particles (positive electrode active material) obtained by a laser diffraction method is not particularly limited, but may be 0.1 µm or more, 1 µm or more, or 2 µm or more, and may be 500 µm or less, 200 µm or less, 100 µm or less, 50 µm or less, or 20 µm or less.

The positive electrode active material is preferably represented by Li₁₊ₐM²_{b}M¹M^{T}_{c}O_{2+d}Xₑ (formula A).

Provided that, M² represents at least one type of element selected from the group consisting of Na, K, Ca, Sr, Ba, and Mg, M¹ represents at least one type of element selected from the group consisting ofNi, Co, Mn, Fe, Al, and P, M^{T} represents at least one type of element selected from the group consisting of transition metal elements except Ni, Co, Mn, and Fe, X represents at least one type of element selected from the group consisting of nonmetallic elements except O and P, and -0.4 < a < 1.5, 0 ≤ b < 0.5, 0 ≤ c < 0.5, -0.5 < d < 1.5, and 0 ≤ e < 0.5 are satisfied.

M^{T} is preferably at least one type of element selected from the group consisting of Cu, Ti, Mg, Al, W, Mo, Nb, Zn, Sn, Zr, Ga, V, B, Si, Ca, Sr, Ba, Ge, Cr, Sc, Y, La, Ta, Tc, Ru, Rh, Pd, Ag, Cd, and In.

Examples of X include F, S, Cl, Br, I, Se, Te, and N.

Among M¹, it is preferable to contain at least Ni.

The molar fraction of Ni in M¹ is more preferably 0.3 to 0.95.

The crystal structure of the composite oxide is not particularly limited, but a layered structure is preferable, and a hexagonal or a monoclinic crystal structure is more preferable.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₃, P6₂, P6₄, P6₃, P-6, P6/m, P6₃/m, P622, P6₁22, P6₅22, P6₁22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

The monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Further, the crystal structure of the composite oxide preferably belongs to a space group of R-3m included in the hexagonal crystal structure or C2/m included in the monoclinic crystal structure.

Note that the crystal structure of the positive electrode active material is identified from an X-ray powder diffraction pattern obtained by X-ray powder diffraction measurement using CuKα radiation as a radiation source.

The positive electrode active material according to the present embodiment has a high circularity and contains voids having a relatively small equivalent circle diameter, and the SOC dependency of the battery resistance is low in the lithium ion secondary battery. The reason for this is not clear, but the following contributions are conceivable.

In the lithium ion secondary battery, charging and discharging are performed with insertion and extraction of lithium ions at an interface between the positive electrode active material and an electrolytic solution, and the lithium ions diffuse in the crystal in the positive electrode material particles. In particular, in a region where the depth of charge is shallow, the occupancy of the lithium ion seat is high, and thus diffusion of lithium ions into the particles tends to be small, and the battery resistance tends to be high.

When cracks are present in the particles, the interface between the positive electrode active material and the electrolytic solution increases, so that insertion and extraction of lithium ions at the interface is activated, but since gaps are formed between the primary particles, diffusion of lithium ions to the entire secondary particles is inhibited.

It is considered that the presence of an appropriate void having a high circularity and a relatively small equivalent circle diameter inside the particle forms the interface between the positive electrode active material and the electrolytic solution not only at an outer peripheral portion of the particle of the positive electrode active material but also inside the particle, and there is contact between the particles, so that diffusion of lithium ions to the entire secondary particles smoothly proceeds. Therefore, the diffusion distance of lithium ions in the secondary particles of the positive electrode active material can be reduced, and lithium ions can be more uniformly diffused in the particles and between the particles. In particular, in a region where the depth of charge is shallow, the influence that lithium ions are more likely to be uniformly diffused appears strongly, and the effect of lowering the battery resistance becomes remarkable, and as a result, it is considered that the SOC dependency of the battery resistance can be suppressed to be low.

### (Method for Producing Positive Electrode Active Material)

Hereinafter, an example of a method for producing the positive electrode active material will be described.

The positive electrode active material according to an embodiment of the present invention can be produced, for example, by the following steps (1) to (3):
step (1): a step of mixing of an activation agent containing one type or two or more types of alkali metal compounds with an electrode material mixture containing a positive electrode active material and a binder;
step (2): a step of heating the obtained mixture to a retention temperature equal to or higher than a melting start temperature of the activation agent to activate the positive electrode active material contained in the mixture; and
step (3): a step of bringing the mixture after heating into contact with a water-containing liquid to obtain a slurry containing a solid component and a liquid component, and then separating the slurry into a solid component and a liquid component. In this step, the total content of potassium and sodium in the liquid component after separation is preferably 0.090 to 2.0 mass% or less, and the total content of potassium and sodium in the solid component after separation is preferably 1.2 mass% or less.

Hereinafter, each step in the present embodiment will be described in detail.

### Step (1): Activation Agent Mixing Step

In step (1), an electrode material mixture and an alkali metal compound are mixed to obtain a mixture.

First, an electrode material mixture containing a positive electrode active material and a binder is prepared.

The electrode material mixture may be an electrode material mixture which contains a positive electrode active material, a binder, and an electrolyte and from which at least a part of the electrolyte has been removed by contact with an electrolyte cleaning solvent.

### <Electrode Material Mixture before Contact with Electrolyte Cleaning Solvent>

The electrode material mixture before contact contains a positive electrode active material and a binder, and the positive electrode active materials are bonded to each other by the binder. The electrode material mixture may further contain a conductive material, and in this case, the positive electrode active material and the conductive material are bonded to each other by a binding agent. The electrode material mixture may further contain an electrolyte. The electrolyte is a component derived from the electrolytic solution of the battery and impregnated into the electrode material mixture.

### <Positive Electrode Active Material>

Examples of the positive electrode active material include composite compounds including constituent elements, such as lithium, oxygen, fluorine, sodium, magnesium, aluminum, silicon, phosphorus, sulfur, potassium, calcium, titanium, vanadium, chromium, manganese, iron, cobalt, nickel, copper, zinc, gallium, yttrium, niobium, molybdenum, silver, indium, and tungsten.

Note that the positive electrode active material may be composed of a single compound or plural compounds.

Suitable examples of the positive electrode active material include a composite oxide containing one or more types of elements selected from the following element group 1 and one or more types of elements selected from the following element group 2:
element group 1: Ni, Co, Mn, Fe, Al, and P; and
element group 2: Li, Na, K, Ca, Sr, Ba, and Mg.

Among them, the positive electrode active material is preferably represented by the following chemical formula:

Li₁₊ₐM²_{b}M¹M^{T}_{c}O_{2+d}Xₑ

provided that, M² represents at least one type of element selected from the group consisting of Na, K, Ca, Sr, Ba, and Mg,
M¹ represents at least one type of element selected from the group consisting of Ni, Co, Mn, Fe, Al, and P,
M^{T} represents at least one type of element selected from the group consisting of transition metal elements except Ni, Co, Mn, and Fe,
X represents at least one type of element selected from the group consisting of nonmetallic elements except O and P, and
-0.4 < a < 1.5, 0 ≤ b < 0.5, 0 ≤ c < 0.5, -0.5 < d < 1.5, and 0 ≤ e < 0.5 are satisfied.

M^{T} is preferably at least one type of element selected from the group consisting of Cu, Ti, Mg, Al, W, Mo, Nb, Zn, Sn, Zr, Ga, V, B, Si, Ca, Sr, Ba, Ge, Cr, Sc, Y, La, Ta, Tc, Ru, Rh, Pd, Ag, Cd, and In. Examples of X include F, S, Cl, Br, I, Se, Te, and N.

The positive electrode active material is preferably a composite oxide containing at least Li and Ni.

Furthermore, in the positive electrode active material, the molar fraction of Ni in M¹ is more preferably 0.3 to 0.95.

The crystal structure of the composite oxide as the positive electrode active material is not particularly limited, but a preferred crystal structure is a layered structure. More preferably, a hexagonal or monoclinic crystal structure is preferable.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3cl, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

The monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Further, the crystal structure of the composite oxide preferably belongs to a space group of R-3m included in the hexagonal crystal structure or C2/m included in the monoclinic crystal structure.

The particle size (equivalent circle diameter) of the positive electrode active material in the electrode material mixture is not particularly limited. It is usually about 0.001 to 100 µm. The positive electrode active material can be in the form of secondary particles in which a plurality of primary particles are aggregated.

### <Conductive Material>

Examples of the conductive material include metal-based conductive materials such as metal particles and carbon-based conductive materials made of carbon materials.

Specific examples of the carbon-based conductive materials include graphite powder, carbon black (for example, acetylene black), and fibrous carbon materials (for example, graphitized carbon fiber and carbon nanotube).

The carbon-based conductive material may be composed of a single carbon material or plural carbon materials.

Furthermore, the specific surface area of the carbon material used as the carbon-based conductive material can be usually 0.1 to 500 m²/g.

In this case, the conductive material can be composed only of 30 m²/g or more of a carbon-based conductive material, and may be 30 m²/g or more of carbon black, or 30 m²/g or more of acetylene black.

Note that, when an activation agent containing an alkali metal compound having oxidizability described later is used, the rate of oxidation treatment of the carbon-based conductive material can be increased, and even a carbon material having a small specific surface area can be oxidized in some cases.

### <Binder>

Examples of the binder (binder before activation treatment) contained in the electrode material mixture are thermoplastic resins, specific examples thereof include fluororesins such as polyvinylidene fluoride (hereinafter, sometimes referred to as PVdF), polytetrafluoroethylene (hereinafter, sometimes referred to as PTFE), a tetrafluoroethylene-hexafluoropropylene-vinylidene fluoride-based copolymer, a hexafluoropropylene-vinylidene fluoride-based copolymer, and a tetrafluoroethylene-perfluorovinyl ether-based copolymer; polyolefin resins such as polyethylene and polypropylene; and a styrene butadiene copolymer (hereinafter, sometimes referred to as SBR), and a mixture of two or more kinds thereof may be used.

The blending amounts of the positive electrode active material, the conductive material, and the binder in the electrode material mixture are not particularly limited. The blending amount of the binder can be 0.5 to 30 parts by weight and may be 1 to 5 parts by weight with respect to 100 parts by weight of the positive electrode active material. The blending amount of the conductive agent may be 0, but can be 0 to 50 parts by weight and may be 1 to 10 parts by weight with respect to 100 parts by weight of the positive electrode active material.

### <Electrolyte>

Examples of the electrolyte include LiPF₆, LiBF₄, LiClO₄, LiN(SO₂CF₃)₂, LiN(SO₂F)₂, and LiCF₃SO₃. The amount of the electrolyte contained in the electrode material mixture is not limited, and may be 0.0005 to 7 mass%.

The electrode material mixture may contain a solvent derived from the electrolytic solution. Examples of the solvent include dimethyl carbonate, diethyl carbonate, and ethyl methyl carbonate.

Such an electrode material mixture can be obtained by separating and recovering the electrode material mixture from a waste electrode having a current collector and an electrode material mixture layer.

The "waste electrode" can be an electrode recovered from a discarded battery, and a waste material of an electrode generated in the processes for manufacturing electrodes and batteries. The discarded battery may be a used battery or may be an unused but non-standard battery. Furthermore, the waste material of an electrode can be an end part of an electrode generated in the manufacturing process for a battery, and a non-standard electrode. Furthermore, disposed articles of an electrode material mixture that is not stuck to a current collector, which are produced in an electrode material mixture production step, can also be used.

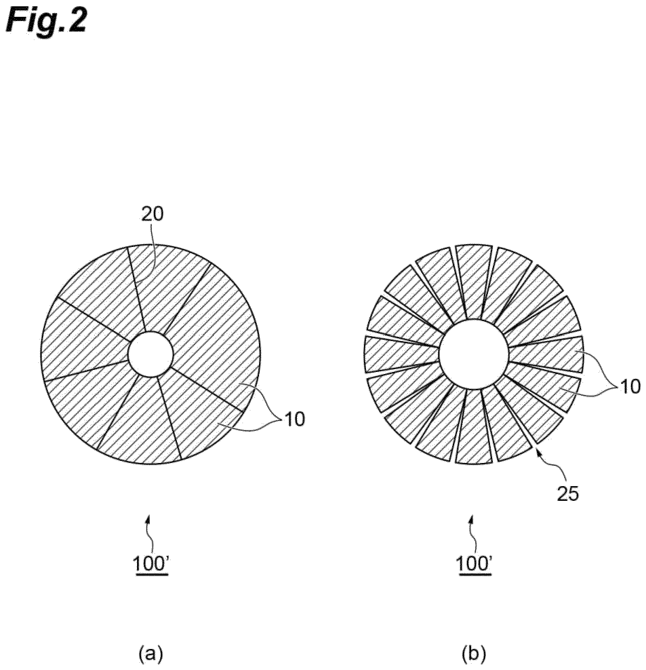

Note that, in a waste electrode of a used battery in which a charge-discharge cycle is repeated many times, cracks are often formed between the primary particles 10 in secondary particle 100' of the positive electrode active material as shown in FIG. 2(b), and in a waste electrode of a battery in which the number of elapsed charge-discharge cycles is small or a commercially available positive electrode active material, cracks 25 are not often formed between the primary particles 10 in the secondary particle 100' as shown in FIG. 2(a). In the production of the positive electrode active material of the present embodiment, the positive electrode active material as a raw material may be cracked or may not be cracked.

The electrode includes a current collector that is a metal foil such as an aluminum foil or a copper foil, and an electrode material mixture layer provided on the current collector. The electrode material mixture layer may be provided on one surface or both surfaces of the current collector.

Examples of the method of separating from the electrode material mixture from the electrode having an electrode material mixture layer and a current collector include a method of mechanically peeling the electrode material mixture layer from the current collector (for example, a method of scraping off the electrode material mixture from the current collector), a method of peeling the electrode material mixture layer from the current collector by infiltrating a solvent into an interface between the electrode material mixture layer and the current collector, and a method of separating the electrode material mixture layer by dissolving the current collector using an alkaline or acidic aqueous solution. A method of mechanically peeling the electrode material mixture layer from the current collector is preferable.

### (Cleaning of Electrode Material Mixture)

Subsequently, an electrolyte cleaning solvent is brought into contact with the prepared electrode material mixture to remove at least a part of the electrolyte from the electrode material mixture. Specifically, an electrode material mixture containing a positive electrode active material, a binder, and an electrolyte is brought into contact with an electrolyte cleaning solvent to obtain a slurry containing a solid component and a liquid component, and then the slurry is separated into a solid component and a liquid component.

The solid-liquid separation is a step of separating the slurry into a liquid component and a solid component. The solid-liquid separation method may be a conventionally known method, and examples thereof include filtration and centrifugation.

The electrolyte cleaning solvent is not particularly limited. Examples thereof include carbonic acid esters such as ethylene carbonate, dimethyl carbonate, ethyl methyl carbonate, diethyl carbonate, and propylene carbonate; water; ketones such as acetone, methyl ethyl ketone, diethyl ketone, and methyl isobutyl ketone; and alcohols such as ethanol, methanol, propanol, and isopropyl alcohol.

The contact of the electrolyte cleaning solvent with the electrode material mixture can be performed in a known contact device between powder and liquid, for example, a stirring tank or the like.

In the step of bringing the electrode material mixture into contact with the electrolyte cleaning solvent, the slurry concentration, that is, the concentration of the solid component with respect to the volume of the slurry is preferably 3 to 2000 g/L.

In the step of bringing the electrode material mixture into contact with the electrolyte cleaning solvent, it is preferable to obtain a slurry by stirring the electrode material mixture and the cleaning solvent. The peripheral speed of the tip of a stirring blade can be 0.1 to 1.0 m/s.

The contact method is not particularly limited, but the contact is preferably performed by the following step (4).

### Step (4): Electrolyte-Containing Electrode Material Mixture Cleaning Step

Step (4) is a step of obtaining the electrode material mixture from which at least a part of the electrolyte has been removed of step (1), and is a step of bringing an electrode material mixture containing a positive electrode active material, a binder, and an electrolyte into contact with an electrolyte cleaning solvent to obtain a slurry containing a solid component and a liquid component, and then separating the slurry into a solid component and a liquid component. It is preferable that the amount of P and the amount F in the liquid component after separation are 0.0020 to 2.0 mass% and 0.01 to 7.0 mass%, respectively, and the amount of P remaining in the solid component after separation is 0.7 mass% or less.

In the step of cleaning the electrode material mixture, the obtained solid component may be rinsed after solid-liquid separation. The rinsing is an operation of bringing the obtained solid component into contact with the electrolyte cleaning solvent again to obtain a slurry, and then separating the slurry again into a solid component and a liquid component. In the cleaning of the electrode material mixture, rinsing may be performed a plurality of times. The slurry concentration in the rinsing can also be the same as described above. Also in the rinsing, the slurry can be stirred as described above.

In the step of cleaning the electrode material mixture, the contact time between the solid component and the liquid component is preferably 1 minute or more and less than 25 hours. The contact time between the solid component and the liquid component in the step of cleaning the electrode material mixture is a time during which the electrode material mixture is in contact with the electrolyte cleaning solvent. For example, when rinsing is not performed, the contact time between the solid component and the liquid component is a time A required from the start of contact between the electrode material mixture (solid component) containing an electrolyte and the electrolyte cleaning solvent to the completion of the operation of solid-liquid separating the slurry into a solid component and a liquid component. When rinsing is performed, the contact time between the solid component and the liquid component is the sum of the time A and a time B required from the start of contact between the solid component after separation and the electrolyte cleaning solvent to the completion of solid-liquid separation between the solid component and the liquid component in each rinsing step. When solid-liquid separation is performed by filtration, the completion time of solid-liquid separation is the end time of filtration.

In step (4) described above, the amount of P and the amount F in the liquid component after solid-liquid separation may be 0.0020 to 2.0 mass% and 0.01 to 7.0 mass%, respectively, and the amount of P remaining in the solid component after solid-liquid separation may be 0.7 mass% or less.

Since the amount of P and the amount of F in the liquid component after solid-liquid separation and the amount of P in the solid component after solid-liquid separation are not too high, the electrolyte can be sufficiently removed from the electrode material mixture. For example, when the electrolyte remains, the following reaction occurs, and the structure of the positive electrode active material changes from a layered rock salt structure to a spinel structure.

LiPF₆ + 16LiMO₂ + 2O₂ → 6LiF + Li₃PO₄ + 8LiM₂O₄

Furthermore, when lithium carbonate is contained as an activator, consumption of lithium by the following reaction also occurs.

LiPF₆ + 4Li₂CO₃ → 6LiF + Li₃PO₄ + 4CO₂

On the other hand, since the amount of P and the amount of F in the liquid component after solid-liquid separation are not too low, deterioration of the positive electrode active material due to excessive cleaning is suppressed.

Note that, in the case of performing one or more times of the rinsing step, the contents of P and F in the total liquid component obtained by mixing all of the liquid component obtained by the first solid-liquid separation and the liquid component obtained by the subsequent solid-liquid separation of one or more times of rinsing satisfy 0.0020 to 2.0 mass% and 0.01 to 7.0 mass%, respectively. In the case of performing one or more times of the rinsing step, the content of P in the solid component obtained by the last solid-liquid separation satisfies 0.7 mass% or less. Furthermore, when cleaning is performed continuously, the contents of P and F with respect to the liquid component continuously discharged from the device may be in the above range.

Furthermore, in any of cases of not performing rinsing and performing one or more times of rinsing, in the cleaning of the electrode material mixture, it is preferable that the content of P is 2.0 mass% or less and the content of F is 7.0 mass% or less in the liquid component obtained by the last solid-liquid separation, and it is also preferable that the content of P is 0.0020 mass% or more and the content of F is 0.01 mass% or more. Furthermore, when cleaning is performed continuously, the amounts of P and F with respect to the liquid component discharged from the device may be in ranges of 0.0020 to 2.0 mass% and 0.01 to 7.0 mass%, respectively.

The amount of P remaining in the solid component after solid-liquid separation may be 0.0001 mass% or more. The amount of F remaining in the solid component after solid-liquid separation can be 3.5 mass% or less and may be 0.0001 mass% or more.

The separated solid component can be subjected to drying of the electrolyte cleaning solvent by decompression and/or heating as necessary. The heating temperature can be set to 50 to 200°C.

### (Mixing of Electrode Material Mixture from Which at Least Part of Electrolyte Has Been Removed and Activation Agent)

Next, an activation agent containing at least one type of compound selected from the group consisting of a potassium compound and a sodium compound is mixed with the prepared electrode material mixture after removal of the electrolyte to obtain a mixture.

The mixing method of the electrode material mixture and the activation agent may be either dry mixing or wet mixing, or a combination of these mixing methods, and the mixing order is also not particularly limited.

At the time of mixing, it is preferable to carry out a step of performing pulverization and mixing by using a mixing device equipped with mixing media such as balls, and accordingly, the mixing efficiency can be enhanced.

As the mixing method, from the viewpoint that mixing can be performed more conveniently, dry mixing is preferable. For the dry mixing, a V-type mixer, a W-type mixer, a ribbon mixer, a drum mixer, a powder mixer equipped with a stirring blade inside the mixer, a ball mill, a vibration mill, or a combination of these devices can be used.

As a mixing device used for dry mixing, a powder mixer equipped with a stirring blade inside the mixer is preferable, and specific examples thereof include a Loedige mixer (manufactured by MATSUBO Corporation).

Hereinafter, the activation agent used in this step will be described in detail.

### <Activation Agent>

The activation agent contains at least one type of compound selected from the group consisting of a potassium compound and a sodium compound. Here, potassium and/or sodium may be referred to as an alkali metal element X. The activation agent may contain an alkali metal compound containing another alkali metal such as Li in addition to the potassium compound and the sodium compound.

When the activation agent comes into contact with the positive electrode active material, the positive electrode active material can be activated. When the alkali metal compound in the activation agent particularly includes a molten part, the contact property between the molten part and the positive electrode active material is improved, so that the activation of the positive electrode active material is further promoted.

Furthermore, the electrode material mixture may contain a fluorine-containing compound derived from the binder and/or the electrolytic solution, but by bringing the fluorine-containing compound into contact with the activation agent, a fluorine component is stabilized as an alkali metal fluoride, so that generation of a corrosive gas such as hydrogen fluoride can be suppressed. Note that it is desirable to prevent the generation of hydrogen fluoride also because the activity of the positive electrode active material is lowered.

The percentage of the whole alkali metal compound in the activation agent is appropriately set in consideration of the type of the alkali metal compound, the type of the positive electrode active material as a target, and the like, and is usually 50 wt% or more and preferably 70 wt% or more (including 100 wt%) with respect to the total weight of the activation agent.

The concentration of at least one type of alkali metal selected from the group consisting of potassium and sodium among the alkali metals contained in the alkali metal compound can be arbitrarily adjusted to 0 to 100 mol%, but is preferably 10 mol% or more, more preferably 20 mol% or more, and is preferably 90 mol% or less, and more preferably 80 mol% or less.

Examples of the alkali metal compound to be a component of the activation agent include hydroxide, borate, carbonate, oxide, peroxide, superoxide, nitrate, phosphate, sulfate, chloride, vanadate, bromide, molybdate, and tungstate of alkali metals. These can be used singly or in combination of plural ones thereof, as the component(s) of the activation agent.

Specific examples of suitable alkali metal compounds include hydroxides such as LiOH, NaOH, KOH, RbOH, and CsOH;
boron oxides such as LiBO₂, NaBO₂, KBO₂, RbBO₂, and CsBO₂;
carbonates such as Li₂CO₃, Na₂CO₃, K₂CO₃, RbCO₃, and CsCO₃;
oxides such as Li₂O, Na₂O, K₂O, Rb₂O, and Cs₂O;
peroxides such as Li₂O₂, Na₂O₂, K₂O₂, Rb₂O₂, and Cs₂O₂;
superoxides such as LiO₂, NaO₂, KO₂, RbO₂, and CsO₂;
nitrates such as LiNO₃, NaNO₃, KNO₃, RbNO₃, and CsNO₃;
phosphates such as Li₃PO₄, Na₃PO₄, K₃PO₄, Rb₃PO₄, and Cs₃PO₄;
sulfates such as Li₂SO₄, Na₂SO₄, K₂SO₄, Rb₂SO₄, and Cs₂SO₄;
chlorides such as LiCl, NaCl, KCl, RbCl, and CsCl;
bromides such as LiBr, NaBr, KBr, RbBr, and CsBr;
vanadates such as LiVO₃, NaVO₃, KVO₃, RbVO₃, and CsVO₃;
molybdates such as Li₂MoO₄, Na₂MoO₄, K₂MoO₄, Rb₂MoO₄, and CsMoO₄; and
tungstates such as Li₂WO₄, Na₂WO₄, K₂WO₄, Rb₂WO₄, and CsWO₄.

Here, in order to further enhance the activation effect of the positive electrode active material, the activation agent can contain the same alkali metal element as the alkali metal element contained in the positive electrode active material in the electrode material mixture, in addition to at least one type of compound selected from the group consisting of a potassium compound and a sodium compound.

That is, when the positive electrode active material in the electrode material mixture is a lithium composite oxide, the activation agent preferably contains a lithium compound in addition to at least one type of compound selected from the group consisting of a potassium compound and a sodium compound. Suitable examples of the lithium compound include LiOH, LiBO₂, Li₂CO₃, Li₂O, Li₂O₂, LiO₂, LiNO₃, Li₃PO₄, Li₂SO₄, LiCl, LiVO₃, LiBr, Li₂MoO₄, and Li₂WO₄.

The activation agent may contain a compound except the alkali metal compound as necessary. Examples of the compound except the alkali metal compound include alkaline earth metal compounds containing alkaline earth metal elements such as magnesium, calcium, and barium. The alkaline earth metal compound is contained in the activation agent together with the alkali metal compound, for the purpose of controlling the melting start temperature of the activation agent.

Furthermore, the content of the compound except the alkali metal compound in the activation agent is selected to the extent that does not noticeably suppress the effect originating from the above-mentioned molten alkali metal compound, and is less than 50 wt% of the total weight of the activation agent.

The addition amount of the activation agent in the mixture of the electrode material mixture and the activation agent is preferably 0.001 to 100 times and more preferably 0.05 to 1 time with respect to the weight of the positive electrode active material contained in the electrode material mixture.

Regarding the number of moles of the alkali metal compound in the activation agent in the mixture of the electrode material mixture and the activation agent, the alkali metal compound can be added such that when the number of moles of the positive electrode active material (for example, formula A) contained in the electrode material mixture is taken as 1, the number of moles of alkali metal element is 0.001 to 200 times.

By appropriately controlling the proportion of the activation agent in the mixture, the cost required for recovering the positive electrode active material from the electrode material mixture can be reduced, and the rate of the oxidation decomposition treatment of the carbon-based conductive material or the binder can be increased. Furthermore, the effect of preventing the generation of a corrosive gas in the activation treatment step can be improved, and further, the discharge capacity of a battery produced using the positive electrode active material to be obtained can be further increased.

Furthermore, at least one type of the alkali metal compounds contained in the activation agent is preferably an alkali metal compound exhibiting alkalinity when dissolved in water. An activation agent containing such an alkali metal compound is such that when dissolved in pure water, the pH of the solution is greater than 7. Hereinafter, such an activation agent may be referred to as "alkaline activation agent".

Since the generation of a corrosive gas in a heating step can be further suppressed by using the alkaline activation agent, the discharge capacity of a battery produced using the positive electrode active material to be recovered can be further increased. Furthermore, by using the alkaline activation agent, the treatment rate for the carbon-based conductive material or the binder can also be increased.

Examples of the alkali metal compound exhibiting alkalinity when dissolved in water contained in the alkaline activation agent include hydroxides, carbonates, hydrogen carbonates, oxides, peroxides, and superoxides of alkali metals. Specific examples thereof include LiOH, NaOH, KOH, RbOH, CsOH; Li₂CO₃, Na₂CO₃, K₂CO₃, RbCO₃, CsCO₃ LiHCO₃, NaHCO₃, KHCO₃, RbHCO₃, CsHCO₃; Li₂O, Na₂O, K₂O, Rb₂O, Cs₂O; Li₂O₂, Na₂O₂, K₂O₂, Rb₂O₂, Cs₂O₂; LiO₂, NaO₂, KO₂, RbO₂, and CsO₂. One type or two or more types of these may be contained in the activation agent.

Furthermore, when the conductive material contained in the electrode material mixture is a carbon-based conductive material, at least one type of alkali metal compounds contained in the activation agent may be an alkali metal compound having oxidizability for oxidatively decomposing the carbon-based conductive material at a temperature of the activation treatment step. Note that an activation agent containing such an alkali metal compound may be hereinafter referred to as "activation agent having oxidizability".

When an activation agent having such oxidizability is used, oxidation of the conductive material, which is a carbon material, into carbon dioxide is promoted, the activation agent particularly exhibits an effect in promoting oxidation of the binder, which is a hydrocarbon material, into carbon dioxide and water vapor, the discharge capacity of a battery produced using the positive electrode active material to be obtained can be further increased, and an effect of preventing the generation of a corrosive gas in the activation treatment step can be further improved in some cases.

Examples of the alkali metal compound having oxidizability necessary for oxidizing a carbon-based conductive material and a hydrocarbon into carbon dioxide and water vapor include peroxides, superoxides, nitrates, sulfates, vanadates, and molybdates of alkali metals. These may be used singly or as a combination of two or more types thereof.

Specific examples thereof include Li₂O₂, Na₂O₂, K₂O₂, Rb₂O₂, Cs₂O₂; LiO₂, NaO₂, KO₂, RbO₂, CsO₂; LiNO₃, NaNO₃, KNO₃, RbNO₃, CsNO₃; Li₂SO₄, Na₂SO₄, K₂SO₄, Rb₂SO₄, Cs₂SO₄; LiVO₃, NaVO₃, KVO₃, RbVO₃, CsVO₃; Li₂MoO₄, Na₂MoO₄, K₂MoO₄, Rb₂MoO₄, CsMoO₄.

The details of the oxidizability of these alkali metal compounds are described in Japanese Unexamined Patent Application Publication No. 2012-186150.

### Step (2): Heating Step

The heating step is a step of heating the mixture obtained in step (1) (hereinafter, referred to as "mixture before heating" in some cases) to a temperature equal to or higher than the melting start temperature of the activation agent. The mixture obtained in this heating step is referred to as "mixture after heating" in some cases.

Note that the "melting start temperature (Tmp) of the activation agent" means the lowest temperature at which a part of the activation agent exhibits a liquid phase.

The melting start temperature (Tmp) of the activation agent is a value determined by differential thermal analysis (DTA). That is, 5 mg of the mixture before heating is subjected to differential thermal analysis (DTA, measurement condition: temperature increase rate: 10°C/min), and a temperature at which the DTA signal indicates an endothermic peak is defined as the melting start temperature (Tmp).

The melting start temperature (Tmp) of the activation agent is preferably 700°C or lower, and more preferably 600°C or lower. There is no lower limit to the melting start temperature (Tmp) of the activation agent, but it may be, for example, 150°C.

Furthermore, the melting point of the activation agent means the lowest temperature at which a part of the activation agent exhibits a liquid phase when only the activation agent is heated. When the electrode material mixture and the activation agent are mixed, the melting start temperature (Tmp) of the activation agent is lower than the melting point of the activation agent.

The melting point of the activation agent is a value determined by differential thermal analysis (DTA). Specifically, 5 mg of the activation agent is subjected to differential thermal analysis (DTA, measurement condition: temperature increase rate: 10°C/min), and a temperature at which the DTA signal indicates an endothermic peak is defined as the melting point of the activation agent.

The atmosphere in the heating is not particularly limited, and may be an oxygen-containing gas such as air, nitrogen, argon, or carbon dioxide. The pressure of the atmosphere is not particularly limited, and may be atmospheric pressure, but may be a reduced pressure atmosphere or a pressurized atmosphere.

In step (2), the following action occurs as a result of heating the mixture before heating to a temperature equal to or higher than the melting start temperature (Tmp) of the activation agent as described above.

When the activation agent in a fused state comes into contact with the positive electrode active material, deterioration of the crystal structure of the positive electrode active material can be suppressed. Furthermore, depending on cases, a crystal structure repairing action can also be obtained.

When the activation agent in a fused state comes into contact with a carbon-based conductive material or a binder, the rate of oxidative decomposition of the conductive material and the binder is increased, and further, when the activation agent in a fused state comes into contact with a fluorine compound derived from the binder and the electrolytic solution, a fluorine component is stabilized as an alkali metal fluoride, the generation of hydrogen fluoride, which is a corrosive gas, is prevented, and deterioration of the crystal structure of the positive electrode active material is suppressed.

Further, when the activation agent contains the same alkali metal as that of the positive electrode active material, it is also possible to supply the alkali metal that is insufficient for the positive electrode active material.

The temperature of the heating step and the retention time at that temperature can be appropriately regulated by means of the respective types and combinations of the positive electrode active material, the conductive material, and the binder constituting the electrode material mixture, and the alkali metal compound and other compounds, which are contained in the activation agent. Usually, the temperature is in a range of 100 to 1500°C, and the retention time is about 10 minutes to 24 hours.

It is preferable that the temperature of the heating step is a temperature higher than the melting point of the alkali metal compound contained in the activation agent. Note that, when a plurality of compounds is mixed, the melting point of the alkali metal compound may be lower than the melting point of a simple substance of each of the compounds. When the activation agent contains two or more kinds of alkali metal compounds, the eutectic point is considered as the melting point of the alkali metal compound.

After the heating step, as necessary, the mixture can be cooled to any temperature such as, for example, about room temperature.

### Step (3): Solid-Liquid Separation Step (Removal of Alkali Metal)

This step is a step of bringing the mixture after heating into contact with a water-containing liquid to obtain a slurry containing a solid component and a liquid component, and then separating the slurry into a solid component and a liquid component. The total content of potassium and sodium in the liquid component after separation is preferably 0.090 to 2.0 mass% or less, and the total content of potassium and sodium in the solid component after separation is preferably 1.2 mass% or less.

The mixture after heating contains, in addition to the positive electrode active material, a component derived from the activation agent (such as an alkali metal compound), an undecomposed conductive material or binder, and other undecomposed product of the electrode material mixture. Furthermore, when an electrolytic solution containing a fluorine component is contained in the electrode material mixture, a fluorine component derived from the electrolyte may be contained.

In order to separate and recover the positive electrode active material from the mixture after heating, a water-containing liquid is added to the mixture to form a slurry, and then solid-liquid separation is performed to separate the slurry into a solid component and a liquid component.

The liquid in the slurrying step is not particularly limited as long as it contains water. The amount of water in the liquid may be 50 mass% or more. In order to increase the solubility of water-soluble components or to increase the treatment rate, the pH may be adjusted by adding components except water to the liquid.

Suitable examples of the water-containing liquid include pure water and an alkaline cleaning liquid. Examples of the alkaline cleaning liquid include aqueous solution of one or more type of anhydrides selected from the group consisting of lithium hydroxide, sodium hydroxide, potassium hydroxide, lithium carbonate, sodium carbonate, potassium carbonate, and ammonium carbonate, and hydrates thereof. Furthermore, ammonia can also be used as an alkali.

The slurry to be obtained contains a solid component mainly containing a positive electrode active material and a liquid component containing a water-soluble component except the positive electrode active material. Note that the liquid component includes an alkali metal component derived from the activation agent and/or a fluorine component derived from the binder and the electrolytic solution.

The amount of the liquid to be added to the mixture is appropriately determined in consideration of the respective amounts of the positive electrode active material contained in the mixture and the water-soluble component except the positive electrode active material.

In step (3), it is preferable to bring the mixture after heating into contact with the water-containing liquid so that the slurry concentration, that is, the concentration of the solid component with respect to the volume of the slurry is 12 to 1000 g/L.

In step (3), it is preferable to obtain a slurry by stirring the mixture after heating and the water-containing liquid. As a result, the dissolution of the water-soluble component is promoted. The peripheral speed of the tip of a stirring blade is preferably set to 0.1 to 0.9 m/s.

The slurry formed in the slurrying step is then subjected to solid-liquid separation. The solid-liquid separation is a step of separating the slurry into a liquid component and a solid component. The solid-liquid separation method may be a conventionally known method, and examples thereof include filtration and centrifugation.

In step (3), the obtained solid component may be rinsed after solid-liquid separation. The rinsing is an operation of bringing the obtained solid component into contact with the water-containing liquid again to obtain a slurry, and then separating the slurry again into a solid component and a liquid component. In step (3), rinsing may be performed a plurality of times. The slurry concentration in the rinsing can also be the same as described above. The rinsing ratio can be set to 1 to 80. The rinsing ratio is the ratio of the weight of the added water-containing liquid to the weight of the solid component. Also in the rinsing, the slurry can be stirred as described above.

In step (3), the contact time between the solid component and the liquid component is preferably 4 minutes or more and less than 24 hours. The contact time between the solid component and the liquid component in step (3) is a time during which the positive electrode active material is in contact with the water-containing liquid. For example, when rinsing is not performed, the contact time between the solid component and the liquid component is a time C required from the start of contact between the solid component such as the mixture after heating and the water-containing liquid to the completion of the operation of solid-liquid separating the slurry into a solid component and a liquid component. When rinsing is performed, the contact time between the solid component and the liquid component is the sum of the time C and a time D required from the start of contact between the solid component after separation and the water-containing liquid to the completion of solid-liquid separation between the solid component and the liquid component in each rinsing step. When solid-liquid separation is performed by filtration, the completion time of solid-liquid separation is the end time of filtration.

In the present embodiment, it is preferable that the total content of potassium and sodium in the liquid component obtained by solid-liquid separation is 0.090 to 2.0 mass%, and the total content of potassium and sodium in the solid component obtained by solid-liquid separation is 1.2 mass% or less.

Since the total content of potassium and sodium in the liquid component and the total content of potassium and sodium in the solid component after solid-liquid separation are not too high, the alkali metal component can be sufficiently removed from the electrode material mixture. On the other hand, since the total content of potassium and sodium in the liquid component is not too low, deterioration of the positive electrode active material due to excessive cleaning is suppressed.

Note that, in the case of performing one or more times of the rinsing step, the total content of potassium and sodium in the total liquid component obtained by mixing all of the liquid component obtained by the first solid-liquid separation and the liquid component obtained by the subsequent solid-liquid separation of one or more times of rinsing satisfies 0.090 to 2.0 mass%. In the case of performing one or more times of the rinsing step, the total content of potassium and sodium in the solid component obtained by the last solid-liquid separation satisfies 1.2 mass% or less. Furthermore, when cleaning is performed continuously, the total content of potassium and sodium with respect to the liquid component continuously discharged from the device may be in a range of 0.090 to 2.0 mass%. Furthermore, in any of cases of not performing rinsing and performing one or more times of rinsing, in the cleaning of the electrode material mixture, the total content of potassium and sodium is preferably 0.090 to 2.0 mass% in the liquid component obtained by the last solid-liquid separation.

The lower limit of the total content of potassium and sodium in the separated solid component may be 0.001 mass%.

The present embodiment can include the following step (5) and/or step (6).

### Step (5): Drying Step

Step (5) is a step of removing water from the solid component obtained in step (3) by heating and/or exposing, to a reduced-pressure environment, the solid component. Here, it is preferable to change an ambient pressure at which the solid component exists and/or a temperature of the solid component so that the ratio of the saturated water vapor pressure at the temperature of the solid component to the ambient pressure becomes 80% or more within 24 hours after the slurry is separated into the solid component and the liquid component.

When the ratio of the saturated water vapor pressure at the temperature of the solid component to the ambient pressure at which the solid component exists is 80% or more, this is a condition under which water is sufficiently removed from the solid component.

As described above, when such a condition is reached within 24 hours after the slurry is separated into the liquid component and the solid component, a time during which the solid component is exposed to a wet environment is shortened, whereby deterioration of the positive electrode active material can be suppressed.

Specifically, for example, the following reaction may proceed in a wet environment.

2LiMO₂ + H₂O → 2LiOH + M₂O₃

Furthermore, the following reaction may also proceed in a wet environment containing carbon dioxide such as air.

2LiMO₂ + CO₂ → Li₂CO₃ + M₂O₃

Specifically, a condition under which water is sufficiently removed from the solid component only by decompression may be reached, a condition under which water is sufficiently removed from the solid component only by heating may be reached, or a condition under which water is sufficiently removed from the solid component by heating and decompression may be reached.

The time until the ratio of the saturated water vapor pressure at the temperature of the solid component to the ambient pressure at which the solid component exists becomes 80% or more can be measured by monitoring the ambient pressure at which the solid component exists and the temperature of the solid component. Specifically, for example, a sensor such as a pressure gauge and a hygrometer provided in a dryer may be used.

The heating temperature is preferably 100°C or higher in order to remove water. The temperature is preferably 150°C or higher in order to more sufficiently remove moisture. In particular, a temperature of 250°C or higher is preferable because the discharge capacity of a battery produced using the positive electrode active material to be obtained is further increased. The temperature in the drying step may be constant, or may be changed stepwise or continuously. The attainment temperature range of the heating can be set to, for example, 10°C or higher and lower than 900°C.

The ultimate pressure range of the decompression can be set to, for example, 1.0×10⁻¹⁰ to 1.0×10³ Pa.

### Step (6): Recalcination Step (Annealing)

Preferably, the solid component after step (5) is heat-treated at lower than 900°C.

The atmosphere of the heat treatment is not limited, and is preferably an oxygen-containing atmosphere such as air. Furthermore, the temperature of the heat treatment can be set to 100°C or higher. Furthermore, the retention time of the heat treatment can be set to 1 minute to 24 hours. In particular, it is preferable to perform heating at a retention temperature of 350°C or higher for 0.1 hours or more and 5 hours or less.

According to the above-described production method, the above-described positive electrode active material can be obtained.

It is considered that a large number of voids having a large circularity are formed by the positive electrode active material undergoing steps (1) and (2) described above. Furthermore, when there are cracks in the positive electrode active material as a raw material, the cracks also disappear.

Specifically, it is considered that the following reaction occurs on the particle surface and in the particle, dissolution and reprecipitation of Li₁₋ₓMO₂ and LiMO₂ occur, and gas is generated at that time, so that small and round voids are formed.
Particle surface: Li₁₋ₓMO₂ + x/2Li₂CO₃ ⇒ Li⁺ + MO₂⁻+ x/2CO₂↑ + x/2O₂↑

   Li⁺+MO₂⁻ ⇒ LiMO₂
In the particle: Li₁₋ₓMO₂ + x/2Li₂CO₃ ⇒ LiMO₂ + x/2CO₂↑ + x/4O₂↑

The discharge capacity of the finally obtained positive electrode active material according to an embodiment of the present invention can be 150 mAh/g or more.

### Examples

Hereinafter, the present invention will be described in more detail with reference to Examples; however, the present invention is not limited to the following Examples unless the gist thereof is changed.

Measurement of physical properties of a positive electrode active material and a charge and discharge test of a battery using the positive electrode active material were performed as follows.

### (Charge and Discharge Test)

### 1. Production of Electrode (Positive Electrode)

For measurement of the discharge capacity of the positive electrode active material, an electrode (positive electrode) was produced according to the following procedures.

Each positive electrode active material, a binder (PVdF#1100 (manufactured by KUREHA CORPORATION)), and a conductive material (acetylene black (manufactured by Denki Kagaku Kogyo Co., Ltd., product number: DENKA BLACK HS100) were mixed so that the weight ratio of the positive electrode active material : the binder : the conductive material was 92 : 3 : 5. Here, as PVdF as a binder, a binder solution obtained by dissolving PVdF in NMP in advance was used. NMP was added and adjusted so that the total weight of the positive electrode active material, the conductive material, and the binder in a positive electrode material mixture paste was 50 wt%. A positive electrode material mixture paste was produced by kneading with a planetary centrifugal mixer (ARE-310 manufactured by Thinky Corporation).

Note that, as the binder solution, an NMP solution in which PVdF as a binder was dissolved was used, and NMP was added so that the total weight of the positive electrode active material, the conductive material, and the binder in the positive electrode material mixture paste was 50 wt%.

The positive electrode material mixture paste was applied onto an aluminum foil 1085 (manufactured by Nippon Foil Mfg. Co., Ltd.) for a lithium ion secondary battery positive electrode current collector, the aluminum foil having a thickness of 20 µm as a current collector so that the amount of the positive electrode active material was 10.0 ± 0.5 mg/cm², and then vacuum-dried at 150°C for 8 hours to obtain a positive electrode. The electrode area of the positive electrode was 1.65 cm².

### 2. Production of Battery

A non-aqueous electrolyte secondary battery (coin type battery R2032) was produced by combining the above-described positive electrode, an electrolytic solution, a separator, and a negative electrode. Note that assembling of the battery was performed in an argon atmosphere in a glove box.

As the electrolytic solution, a solution obtained by dissolving LiPF₆ to a ratio of 1.0 mol/L in a mixed solution of ethylene carbonate, dimethyl carbonate, and ethyl methyl carbonate at a ratio of 30 : 35 : 35 (volume ratio) was used.

As the separator, a laminated film separator in which a heat-resistant porous layer was laminated on a porous film made of polyethylene was used. Furthermore, metal lithium was used as the negative electrode.

### 3. Charge and Discharge Test

A charge and discharge test was performed by using the produced coin type battery, under the following conditions at 25°C. In the charge and discharge test, the charge capacity and the discharge capacity were determined as follows.

### - Initial Charging and Discharging

Charging conditions: maximum charging voltage 4.3 V, charging time 5 hours, charging current 0.2 CA
Discharging conditions: minimum discharging voltage 2.5 V, discharging time 5 hours, discharging current 0.2 CA

### <Battery Resistance Measurement (Alternating Current Method)>

While the discharge capacity measured in the charge and discharge test as the depth of charge (hereinafter, referred to as SOC) was set to 100%, the battery resistance at SOC 10% and 80% was measured at 25°C. Note that adjustment to each SOC was performed in an environment of 25°C. The battery resistance measurement was performed by an AC impedance method using an electrochemical measurement apparatus (VSP-3 e electrochemical measurement system manufactured by Biologic) with the coin-type cell whose SOC was adjusted being left to stand still for 2 hours in a thermostatic bath at 25°C.
Amplitude voltage: 10 mV
Frequency range: 1 MHz to 0.1 Hz

At this time, a value of the real impedance at 0.1 Hz was taken as the battery resistance. The battery resistance at 0.1 Hz in the alternating current corresponds to the battery resistance after 10 seconds in the direct current.

The battery resistance at SOC 10% was defined as R (SOC10%), the battery resistance at SOC80% was defined as R (SOC80%), and the ratio of R (SOC10%) and R (SOC80%) was defined as the SOC dependency of the battery resistance. SOC dependency of battery resistance = R (SOC10%)/R (SOC80%)

The SOC dependency of the battery resistance is an index related to the degree of increase in battery resistance at the end of discharge. The small SOC dependency of the battery resistance indicates that the change in the battery resistance with respect to the change in the SOC accompanying the charging and discharging of the battery is small, which is preferable from the viewpoint of controlling the battery.

### <Battery Resistance Measurement (Direct Current Method)>

The battery resistance can be measured by a direct current method. While the discharge capacity measured in the charge and discharge test as the depth of charge (hereinafter, referred to as SOC) was set to 100%, the battery resistance at SOC 10% and 80% was measured at 25°C. Note that adjustment to each SOC was performed in an environment of 25°C. The battery resistance measurement was performed in the following order: the coin-type cell whose SOC was adjusted was left to stand still in a thermostatic bath at 25°C for 2 hours, discharged at 2 mA for 15 seconds, left to stand still for 5 minutes, discharged at 2 mA for 15 seconds, left to stand still for 5 minutes, discharged at 4 mA for 15 seconds, left to stand still for 5 minutes, charged at 2 mA for 30 seconds, left to stand still for 5 minutes, discharged at 8 mA for 15 seconds, left to stand still for 5 minutes, charged at 2 mA for 60 seconds, left to stand still for 5 minutes, discharged at 16 mA for 15 seconds, left to stand still for 5 minutes, charged at 2 mA for 120 seconds, and left to stand still for 5 minutes. The slope of the battery resistance was calculated from a plot of the battery voltage after 10 seconds measured at the time of discharging at 2, 4, 8, and 16 mA and each current value using a least square approximation method, and this slope was used as the battery resistance. The battery resistance after 10 seconds in the direct current corresponds to the battery resistance at 0.1 Hz in the alternating current.

The battery resistance at SOC10% was defined as R (SOC10%), the battery resistance at SOC80% was defined as R (SOC80%), and the ratio of R (SOC10%) and R (SOC80%) was defined as the SOC dependency of the internal resistance. SOC dependency of battery resistance = R (SOC10%)/R (SOC80%)

The resistances measured by the alternating current method and the direct current method correspond to the battery resistance after 10 seconds from the current application, and thus can be compared with each other.

The SOC dependency of the internal resistance, which is the ratio of R (SOC10%) and R (SOC80%), can also be compared between the values measured by an alternating current method and a direct current method. Note that the measurement was performed by a direct current method in Examples and an alternating current method in Comparative Examples.

### (Observation of Void in Cross-Section of Positive Electrode Active Material)

The obtained positive electrode active material was embedded in a resin to form a cross-section. As a method for forming a cross-section, a cross-section processing device (manufactured by JEOL Ltd., IB-19520CCP) was used.

An image of a cross-section of the positive electrode active material was taken with a scanning electron microscope (FE-SEM: manufactured by JEOL Ltd., JSM-7900F). The photographing conditions were acceleration voltage: 5 kV, magnification: ×1000, and image resolution: 0.023 µm/pix.

### (Binarization Processing of Cross-Sectional Image of Secondary Particles Contained in Positive Electrode Active Material)

Cross-sectional images of the secondary particles contained in the positive electrode material active material were taken into a computer, and binarized with an intermediate value between the maximum luminance and the minimum luminance in the cross-sectional images of the secondary particles using image analysis software to obtain a binarized image obtained by converting the internal cross-section of the secondary particles to an arbitrary color and converting the void cross-section present inside the cross-section of the secondary particles to an arbitrary color. As the image analysis software, for example, quantitative analysis software (TRI/3D-BON-FCS, manufactured by Ratoc Systems Engineering Co., Ltd.) was used. In the case of using this quantitative analysis software, image binarization processing can be performed by Auto-LW, which is a function of the software. At this time, the cross-sectional image was visually observed, and it was confirmed that there was no discrepancy between the internal cross-section and the void cross-section of the secondary particles. When a discrepancy was observed, the threshold for performing the binarization processing was adjusted. In the image obtained by the binarization processing, secondary particles having an equivalent circle diameter of less than 1.5 µm were removed using an image calculation function. Further, a "binarized image" was obtained by removing secondary particles that were present at the end of the analysis image and were only partially confirmed, and secondary particles whose particle shape was unclear.

### (Extraction of Void from Cross-Sectional Image)

The voids in the secondary particles were extracted from the binarized image, the area, the equivalent circle diameter, and the circularity were calculated for these voids, and the area-based cumulative frequency distribution of the voids having the equivalent circle diameter of the voids and the area-based cumulative frequency distribution of the voids having the circularity of the voids were acquired.

A secondary particle having an equivalent circle diameter of 1.5 µm or more was defined as a secondary particle whose internal void was to be detected, and the number of secondary particles was about 500.

Voids having an equivalent circle diameter of 0.05 µm or more were set as detection targets, and the total number of voids detected in the secondary particles was several thousands to several tens of thousands.

### (Acquisition of Average Porosity)

For 500 secondary particles to be detected, the area ratio of all voids of each secondary particle to the total cross-sectional area (including the voids) of each secondary particle was determined, and the average porosity was determined from the arithmetic average of 500.

### (Example 1)

### A. Acquisition of Positive Electrode A

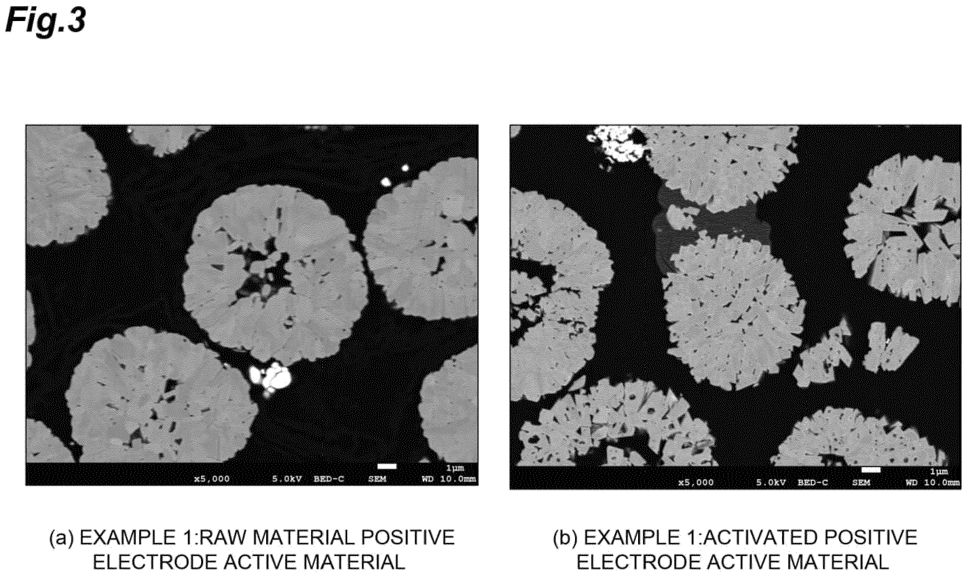

A new lithium ion secondary battery was disassembled to take out the positive electrode. The positive electrode had a structure in which a positive electrode active material layer was laminated on both surfaces of a current collector. In this lithium ion secondary battery, charging and discharging were performed several times. An SEM image of a cross-section of the positive electrode active material of the active material layer of the positive electrode A is shown in FIG. 3(a). Cracks along the grain boundaries of the primary particles were hardly observed in the secondary particles of the positive electrode active material.

### B. Recovery of Electrode Material Mixture from Positive Electrode A

The electrode material mixture was peeled from the current collector from the positive electrode A.

### D. Electrolyte-Containing Electrode Material Mixture Cleaning Step (Corresponding to Step (4))

The obtained electrolyte-containing electrode material mixture was immersed in a sufficiently large amount of water. The obtained solid component was dried under reduced pressure at 100°C for 1 hour, and the electrode material mixture after cleaning was recovered.

### E. Activation Agent Mixing Step (Corresponding to Step (1))

Li₂CO₃ and K₂SO₄ as activation agents were mixed with the cleaned electrode material mixture so as to be 0.15 mol and 0.15 mol with respect to 1 mol of the positive electrode active material in the electrode material mixture to obtain a mixture (mixture before heating). The melting start temperature of the activation agent was 550°C.

### F. Heating Step (Corresponding to Step (2))

The obtained mixture before heating was placed in an alumina calcination container and placed in an electric furnace. Under atmospheric pressure, the mixture was subjected to an activation treatment at a retention temperature of 700°C for a retention time of 6 hours. The heating rate was 300°C/hour, and the cooling to room temperature was natural cooling. After cooling to room temperature, the mixture after the activation treatment was recovered.

### G. Step of Removing Alkali metal (Corresponding to Water Washing and Solid-Liquid Separation in Step (3))

The mixture after the activation treatment was pulverized, and water was added and stirred to form a slurry. Thereafter, the slurry was separated into a solid component and a liquid component by filtration. The slurry concentration was 20 g/L, the contact time with water was 4 minutes (1 minute of stirring + 3 minutes of filtration), and the peripheral speed (maximum flow rate) of the tip of the stirring blade was 0.785 m/s.

### H. Drying Step of Positive Electrode Active Material (Corresponding to Step (5))

The obtained solid component was dried under reduced pressure at 100°C for 1 hour. The time required for the ratio of the saturated water vapor pressure at the temperature of the solid component to the ambient pressure at which the solid component existed to reach 80% after the slurry was separated into a solid component and a liquid component was 20 minutes.

### I. Recalcination Step of Positive Electrode Active Material (Corresponding to Step (6))

The recovered positive electrode active material after water washing was placed in an alumina calcination container and placed in an electric furnace. Under atmospheric pressure, the mixture was heated at a retention temperature of 700°C for a retention time of 1 hour. The heating rate was 300°C/hour, and the cooling to room temperature was natural cooling. After cooling to room temperature, the activated positive electrode active material was recovered.

An SEM photograph of the recovered activated positive electrode active material is shown in FIG. 3(b). Cracks between the primary particles disappeared, and a large number of voids were formed in the primary particles and between the primary particles.

The activated positive electrode material was Li_{1.15}Ni_{1/3}Co_{1/3}M_{1/3}O₂, and the crystal structure was R-3m.

The 50% cumulative volume particle size D50 of the positive electrode active material was 11 µm.

For the recovered activated positive electrode active material, a coin type battery was produced, a predetermined constant current charge/discharge was performed, an internal resistance was then measured at a predetermined SOC, and the SOC dependency of the battery resistance was calculated.

### (Example 2)

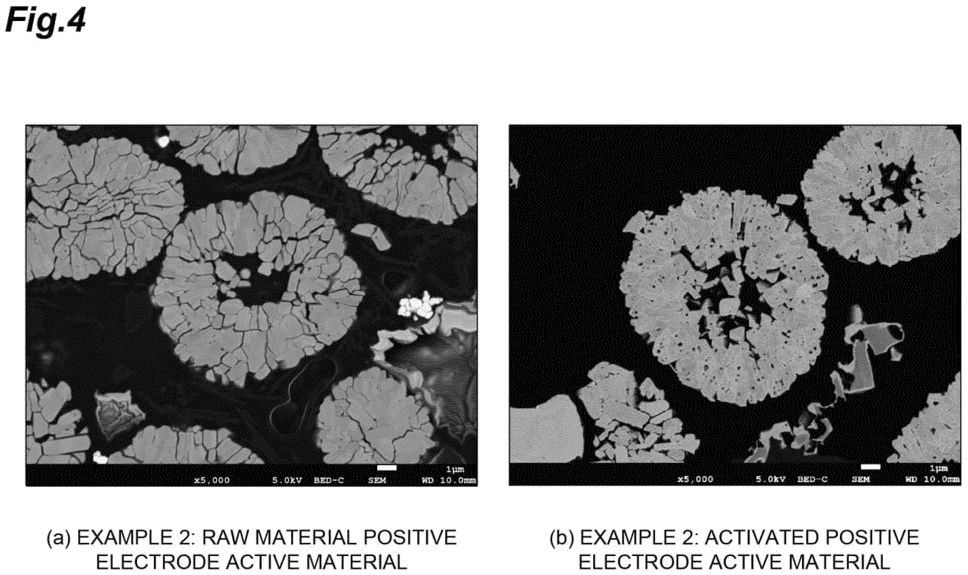

In step A, the used lithium ion secondary battery was disassembled to take out the positive electrode. The positive electrode had a structure in which a positive electrode active material layer was laminated on both surfaces of a current collector. This lithium ion secondary battery was a deteriorated market battery, and was charged and discharged many times based on general use. An SEM image of a cross-section of the positive electrode active material of the positive electrode active material layer is shown in FIG. 4(a). A large number of cracks along the grain boundaries of the primary particles were observed in the secondary particles of the positive electrode active material. Steps A to H were performed in the same manner as in Example 1 except that the origin of the positive electrode was changed.

The activated positive electrode active material obtained after step H was observed by SEM (see FIG. 4(b)), and a large number of voids were formed in the primary particles and between the primary particles. A large number of cracks along the grain boundaries of the primary particles were not observed in the secondary particles of the positive electrode active material.

The composition of the reactivation positive electrode material was Li_{1.14}Ni_{1/3}Co_{1/3}Mn_{1/3}O₂), and the crystal structure was R-3m.

The 50% cumulative volume particle size D50 of the positive electrode active material was 10 µm.

### (Example 3)

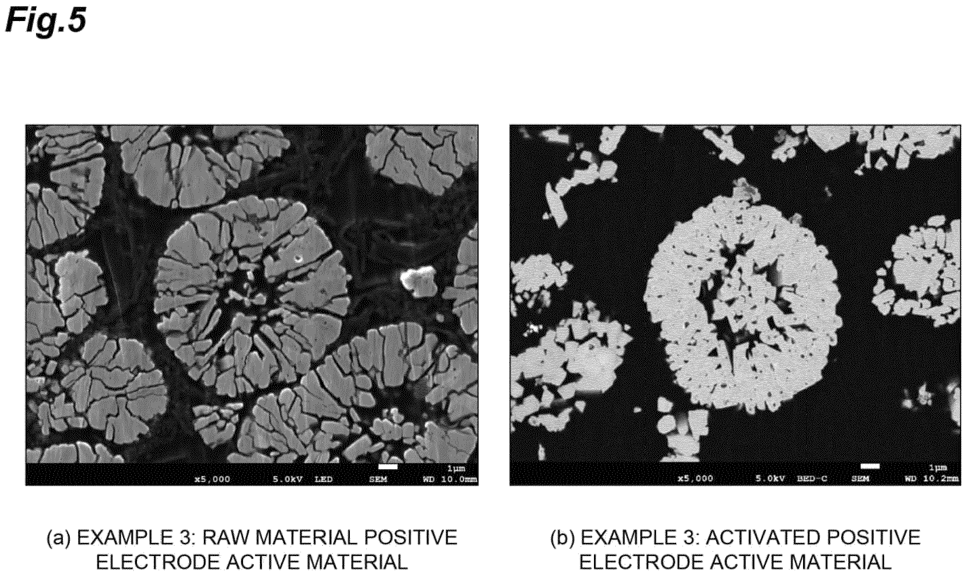

In step A, the used lithium ion secondary battery of a type different from that in Example 2 was disassembled to take out the positive electrode. The positive electrode had a structure in which a positive electrode active material layer was laminated on both surfaces of a current collector. This lithium ion secondary battery was a forced cycle deterioration battery, and was charged and discharged more times than in Example 2. An SEM photograph of a cross-section of the positive electrode active material of the positive electrode active material layer is shown in FIG. 5(a). A large number of cracks along the grain boundaries of the primary particles were observed in the secondary particles of the positive electrode active material. Steps A to H were performed in the same manner as in Example 1 except that the positive electrode was taken out from a different lithium ion secondary battery.

The activated positive electrode active material obtained after step H was observed by SEM (see FIG. 5(b)), and a large number of voids were formed in the primary particles and between the primary particles. A large number of cracks along the grain boundaries of the primary particles were not observed in the secondary particles of the positive electrode active material.

The composition of the reactivation positive electrode material was Li_{1.13}Ni_{1/3}Co_{1/3}Mn_{1/3}O₂, and the crystal structure was R-3m.

The 50% cumulative volume particle size D50 of the positive electrode active material was 9 µm.

### (Comparative Example 1)

The procedure was performed in the same manner as in Example 1 except that particles of a commercially available positive electrode active material (unused product) were used as they were as the finally obtained positive electrode active material without performing steps D to H. The composition of the positive electrode active material was Li_{1.04}Ni_{1/3}Co_{1/3}Mn_{1/3}O₂, and the crystal structure was R-3m.

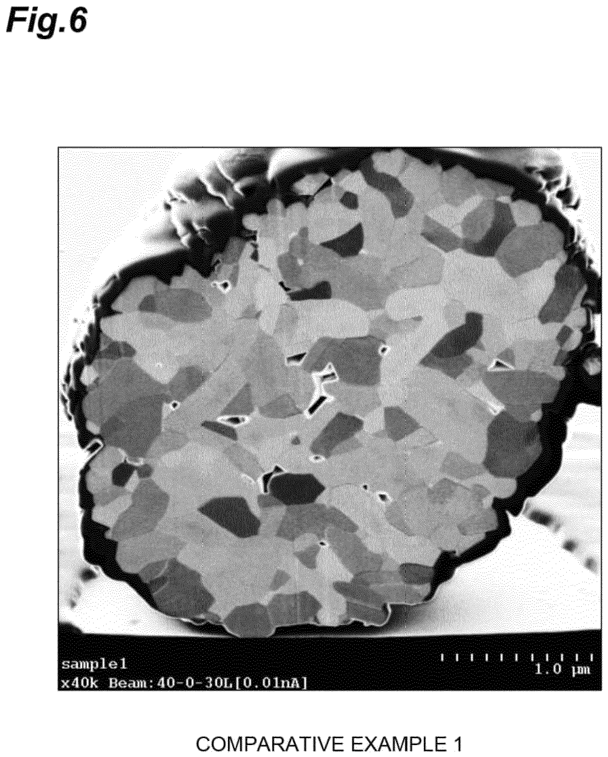

When the positive electrode active material was observed by SEM (see FIG. 6), closed voids were hardly confirmed in the primary particles and between the primary particles.

### (Comparative Example 2)

### 1. Production of Positive Electrode Active Material

Water was placed in a reaction tank equipped with a stirrer and an overflow pipe, a sodium hydroxide aqueous solution was then added, and the liquid temperature was maintained at 30°C.

A nickel sulfate aqueous solution, a cobalt sulfate aqueous solution, and a manganese sulfate aqueous solution were mixed so that the atomic ratio among nickel atoms, cobalt atoms, and manganese atoms was 0.55 : 0.21 : 0.24 to adjust a mixed raw material liquid.

Next, the mixed raw material solution and an ammonium sulfate aqueous solution were continuously added as a complexing agent into the reaction tank under stirring, and nitrogen gas was continuously aerated. A sodium hydroxide aqueous solution was appropriately added dropwise so that the pH of the solution in the reaction tank was 12.1 to obtain nickel-cobalt-manganese composite hydroxide particles, and the nickel-cobalt-manganese composite hydroxide particles were washed with a sodium hydroxide solution, then dehydrated and isolated by a centrifuge, and dried at 105°C to obtain a nickel-cobalt-manganese composite hydroxide. The BET specific surface area of this nickel-cobalt-manganese composite hydroxide was 10.3 m²/g.

The nickel-cobalt-manganese composite hydroxide obtained as described above and a lithium carbonate powder were weighed and mixed so as to satisfy Li/(Ni + Co + Mn) = 1.06, then calcined at 760°C for 5 hours in an atmospheric atmosphere, and further calcined at 850°C for 10 hours in an atmospheric atmosphere to obtain a target positive electrode active material.

The composition of the obtained positive electrode active material was Li_{1.06}Ni_{0.55}Co_{0.21}Mn_{0.24}O₂, and the crystal structure was R-3m.

The 50% cumulative volume particle size D50 of the positive electrode active material was 11.6 µm.

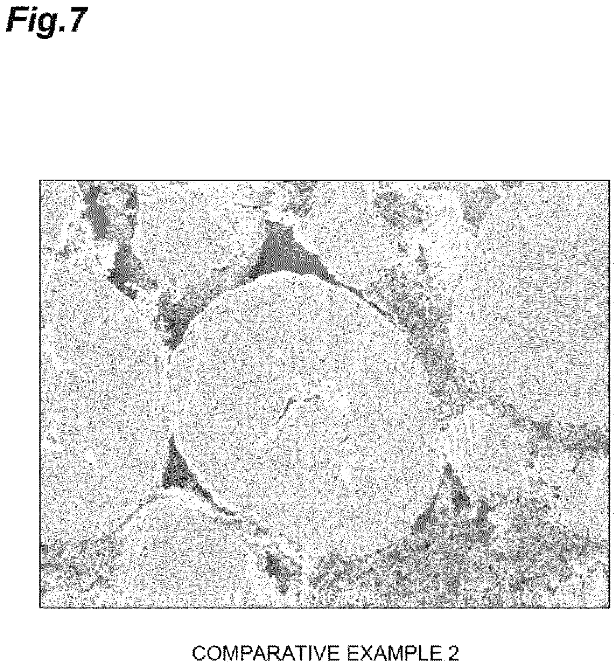

When the positive electrode active material was observed by SEM (see FIG. 7), closed voids were hardly confirmed in the primary particles and between the primary particles.

### (Comparative Example 3)

### 1. Production of Positive Electrode Active Material

Water was placed in a reaction tank equipped with a stirrer and an overflow pipe, a sodium hydroxide aqueous solution was then added, and the liquid temperature was maintained at 45°C.

A nickel sulfate aqueous solution, a cobalt sulfate aqueous solution, a manganese sulfate aqueous solution, and an aluminum sulfate aqueous solution were mixed so that the atomic ratio among nickel atoms, cobalt atoms, manganese atoms, and aluminum was 0.51 : 0.22 : 0.26 : 0.01 to adjust a mixed raw material liquid.

Next, the mixed raw material solution and an ammonium sulfate aqueous solution were continuously added as a complexing agent into the reaction tank under stirring, and nitrogen gas was continuously aerated. A sodium hydroxide aqueous solution was appropriately added dropwise so that the pH of the solution in the reaction tank was 12.1 to obtain nickel-cobalt-manganese-aluminum composite hydroxide particles, and the nickel-cobalt-manganese-aluminum composite hydroxide particles were washed with a sodium hydroxide solution, then dehydrated and isolated by a centrifuge, and dried at 105°C to obtain a nickel-cobalt-manganese-aluminum composite hydroxide. The BET specific surface area of this nickel-cobalt-manganese-aluminum composite hydroxide was 27.7 m²/g.

The nickel-cobalt-manganese-aluminum composite hydroxide obtained as described above and a lithium carbonate powder were weighed and mixed so as to satisfy Li/(Ni + Co + Mn + Al) = 1.06, then calcined at 760°C for 5 hours in an atmospheric atmosphere, and further calcined at 820°C for 10 hours in an atmospheric atmosphere to obtain a target positive electrode active material.

The composition of the obtained activated positive electrode active material was Li_{1.06}Ni_{0.51}Co_{0.22}Mn_{0.26}Al_{0.01}O₂, and the crystal structure was R-3m.

The 50% cumulative volume particle size D50 of the positive electrode active material was 5.0 µm.

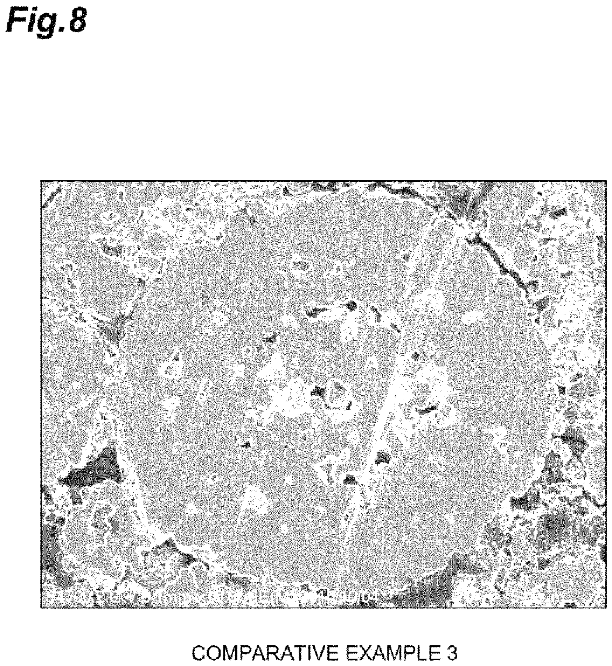

When the positive electrode active material was observed by SEM (see FIG. 8), a large number of voids were formed in the primary particles and between the primary particles.

The circularity and the equivalent circle diameter of voids at the cumulative frequency of 50% in the area-based cumulative frequency distribution, the average porosity in the secondary particles, and the SOC dependency of the battery resistance in the activated positive electrode active material of Examples and Comparative Examples are shown in Table 1.

**[Table 1]**

| | | Example 1 | Example 2 | Example 3 | Comparative Example 1 | Comparative Example 2 | Comparative Example 3 |
|---|---|---|---|---|---|---|---|
| Average porosity of secondary particles | | 10.2 | 12.0 | 6.8 | 0.2 | 1.7 | 17.2 |
| Circularity at cumulative frequency of 50% | - | 4.2 | 2.8 | 2.8 | 2.0 | 5.8 | 7.0 |
| Equivalent circle diameter at cumulative frequency of 50% | µm | 0.6 | 0.4 | 0.5 | 0.1 | 0.7 | 0.5 |
| Amount of P in positive electrode active material (in solid component) | wt% | 0.01 | 0.02 | 0.27 | - | - | - |
| SOC dependency of battery resistance R10%/R80% | - | 1.81 | 0.99 | 2.22 | 8.49 | 4.76 | 4.74 |

In Examples 1 to 3 in which the value at the cumulative frequency of 50% in the area-based cumulative frequency distribution of the equivalent circle diameters of void portions was in a predetermined range and the value at the cumulative frequency of 50% in the area-based cumulative frequency distribution of the circularity of the void portions is in a predetermined range, the SOC dependency of the battery resistance was reduced as compared with Comparative Examples.

### Reference Signs List

10 primary particle
20 grain boundary
30 void
100, 100' secondary particle (positive electrode active material)

## Claims

1. A positive electrode active material for a lithium secondary battery, comprising a plurality of secondary particles in which a plurality of primary particles are aggregated and satisfying the following requirements:
(1) the secondary particles each internally have a plurality of voids, a value at a cumulative frequency of 50% in an area-based cumulative frequency distribution of equivalent circle diameters of the voids based on cross-sectional images of the secondary particles is more than 0.2 µm and 0.65 µm or less, and a value at a cumulative frequency of 50% in an area-based cumulative frequency distribution of circularity of the voids based on cross-sectional images of the secondary particles is 2.2 or more and 6.5 or less; and
(2) the primary particles are an oxide containing one or more types of elements selected from the following element group 1 and one or more types of elements selected from the following element group 2:
element group 1: Ni, Co, Mn, Fe, Al, and P; and
element group 2: Li, Na, K, Ca, Sr, Ba, and Mg.

2. The positive electrode active material for a lithium secondary battery according to Claim 1, wherein a composition of the positive electrode active material for a lithium secondary battery is represented by the following formula:
Li₁₊ₐM²_{b}M¹M^{T}_{c}O_{2+d}Xₑ
provided that, M² represents at least one type of element selected from the group consisting of Na, K, Ca, Sr, Ba, and Mg,
M¹ represents at least one type of element selected from the group consisting of Ni, Co, Mn, Fe, Al, and P,
M^{T} represents at least one type of element selected from the group consisting of transition metal elements except Ni, Co, Mn, and Fe,
X represents at least one type of element selected from the group consisting of nonmetallic elements except O and P, and
-0.4 < a < 1.5, 0 ≤ b < 0.5, 0 ≤ c < 0.5, -0.5 < d < 1.5, and 0 ≤ e < 0.5 are satisfied.

3. The positive electrode active material for a lithium secondary battery according to Claim 1 or 2, wherein the positive electrode active material is obtained by the following steps (1) to (3):
step (1): mixing an activation agent containing at least one type of compound selected from the group consisting of a potassium compound and a sodium compound with an electrode material mixture containing a positive electrode active material and a binder;
step (2): heating the obtained mixture to a retention temperature equal to or higher than a melting start temperature of the activation agent to activate the positive electrode active material contained in the mixture; and
step (3): bringing the mixture after heating into contact with a water-containing liquid to obtain a slurry containing a solid component and a liquid component, and then separating the slurry into a solid component and a liquid component.
